# EUROPÄISCHE PATENTANMELDUNG

(11) **EP 2 740 342 A1**
(43) Veröffentlichungstag der Anmeldung: **11.06.2014**
(21) Anmeldenummer: 13401122.0
(22) Anmeldetag: 27.11.2013
(51) Int. Cl.: A01C 17/00

(54) **Schleuderstreuer**

(30) Priorität: 05.12.2012 DE 102012111794
(71) Anmelder: Amazonen-Werke H. Dreyer GmbH & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Teckemeyer, Stephan, 49504 Lotte (DE)

(57) **Zusammenfassung**

Die Erfindung umfasst einen Schleuderdüngerstreuer mit Vorratsbehälter (2), unter dem zumindest eine um eine aufrechte Achse mittels zumindest einer Antriebswelle (9) rotierend antreibbare Schleuderscheibe (6) angeordnet ist, wobei auf der Schleuderscheibe (6) zumindest eine Wurfschaufel (7; 8) angeordnet ist, und eine Messeinrichtung (13) zur Bestimmung der auf die Antriebswelle (9) wirkenden radialen Kraft, die durch den von der zumindest einen Wurfschaufel (7; 8) abgeworfenen Düngermassenstrom hervorgerufen wird.

## Beschreibung

Die Erfindung betrifft einen Schleuderdüngerstreuer mit Vorratsbehälter, unter dem zumindest eine um eine aufrechte Achse mittels zumindest einer Antriebswelle rotierend antreibbare Schleuderscheibe angeordnet ist, wobei auf der Schleuderscheibe zumindest eine Wurfschaufel angeordnet ist.

Bei derartigen Schleuderdüngerstreuern wird der sich im Vorratsbehälter befindliche Dünger über einstellbare Dosierorgane den Wurfschaufeln der Schleuderscheibe in einstellbaren Mengen zugeleitet.

Um bei derartigen Schleuderstreuern die tatsächliche Menge Dünger, die aktuell ausgebracht wird, feststellen und regeln zu können, ist es beispielsweise durch die EP 1 008 288 B1 bekannt, den Antriebselementen eine Messeinrichtung zur Ermittlung des Antriebsdrehmomentes zuzuordnen. Basierend auf dem festgestellten Drehmoment kann ein Istwert des Massenstroms ermittelt werden. Durch Vergleich mit einem Sollwert kann eine Regelung der genannten Dosierorgane stattfinden.

Ein Nachteil der bekannten Systeme ist es, dass die Bestimmung des Drehmoments von rotierenden Teilen, beispielsweise der Antriebswelle, verhältnismäßig aufwendige Messeinrichtungen erfordert. Eine indirekte Bestimmung des Drehmoments der drehenden Teile über Eigenschaften des Antriebs liefert zum Teil ungenauere Werte für das Drehmoment als eine direkte Bestimmung.

Der Erfindung liegt daher die Aufgabe zugrunde, einen Schleuderdüngerstreuer bereitzustellen, der es erlaubt, die tatsächliche Menge Dünger, die aktuell ausgebracht wird, auf einfache und doch präzise Weise zu bestimmen. Diese Aufgabe wird durch einen Schleuderdüngerstreuer gemäß Anspruch 1 gelöst.

Insbesondere stellt die Erfindung einen Schleuderdüngerstreuer mit Vorratsbehälter bereit, wobei unter dem Vorratsbehälter zumindest eine um eine aufrechte Achse mittels zumindest einer Antriebswelle rotierend antreibbare Schleuderscheibe angeordnet ist, wobei auf der Schleuderscheibe zumindest eine Wurfschaufel angeordnet ist, gekennzeichnet durch, das eine Messeinrichtung zur Bestimmung der auf die Antriebswelle wirkenden radialen Kraft, die durch den von der zumindest einen Wurfschaufel abgeworfenen Düngermassestrom hervorgerufen wird.

Dadurch, dass die Messeinrichtung erlaubt, anstelle des Drehmoments die auf die Antriebswelle wirkende radiale Kraft zu messen, kann eine Vereinfachung erzielt werden. Außerdem haben die Erfinder der vorliegenden Anmeldung erkannt, dass sich auch aus der radialen Kraft präzise Schlüsse auf den von der Wurfschaufel abgeworfenen Düngermassestrom ziehen lassen.

Als radiale Kraft kann hierin insbesondere die Kraft oder Kraftkomponente bezeichnet werden, die senkrecht auf die Längsachse der Antriebswelle wirkt. Die Längsachse der Antriebswelle kann dabei insbesondere annähernd vertikal angeordnet sein, insbesondere senkrecht zur Schleuderscheibe. Die Schleuderscheibe kann insbesondere unmittelbar oder über eine Nabe drehfest und antriebsschlüssig mit der Antriebswelle verbunden sein.

Die Messeinrichtung kann insbesondere derart ausgebildet sein, dass der Betrag der auf die Antriebswelle wirkenden radialen Kraft bestimmbar ist. Mit anderen Worten kann durch die Messeinrichtung ein Messsignal ermittelbar sein, das dem Betrag der radialen Kraft entspricht oder zu diesem proportional ist.

Zur Bestimmung der radialen Kraft kann die Messeinrichtung wenigstens ein, insbesondere mehrere, Sensorelemente umfassen. Mit dem einen oder den mehreren Sensorelementen kann die radial wirkende Kraft bestimmbar sein.

Das wenigstens eine Sensorelement kann insbesondere zwischen einem Lager und einem Gehäuse, in dem die Antriebswelle über das Lager gelagert ist, angeordnet sein.

Die Messeinrichtung kann ein ringförmiges Messelement umfassen, das ein Lager der Antriebswelle umgebend angeordnet ist. Mit anderen Worten kann die Messeinrichtung ein separates Messelement umfassen, das ein Lager der Antriebswelle umgibt.

Das ringförmige Messelement kann insbesondere ein oberes Lager der Antriebswelle umgeben, über das die Antriebswelle in einem Gehäuse gelagert ist.

Am ringförmigen Messelement kann wenigsten ein oben genanntes Sensorelement angeordnet sein. Insbesondere können mehrere Sensorelemente vorgesehen sein, so dass die Wirkrichtung der Kraft bestimmbar ist.

Bei dem wenigstens einen Sensorelement kann es sich insbesondere um ein Element handeln, mit dem eine mechanische Spannung und/oder Dehnung direkt und/oder indirekt bestimmbar oder messbar ist. Beispielsweise kann es sich dabei um einen Dehnungsmessstreifen handeln.

Das wenigstens eine Sensorelement kann insbesondere am äußeren Umfang des ringförmigen Messelements angeordnet sein, also an dessen nach außen weisenden Oberfläche.

Das ringförmige Messelement kann entlang des äußeren Umfangs Vertiefungen aufweisen, in denen je wenigstens ein Sensorelement angeordnet ist. Bei den Vertiefungen kann es sich insbesondere um Nuten oder Ausfräsungen handeln. Dadurch kann ein direkter Kontakt zwischen dem Sensorelement und dem Gehäuse vermieden werden. Insbesondere können eine oder mehrere solche Vertiefungen vorgesehen sein.

Jeweils zwei Sensorelemente können insbesondere auf diametral entgegengesetzten Seiten des ringförmigen Messelements angeordnet sein. Damit können Vorspannkräfte eliminiert werden.

Entlang des äußeren Umfangs des ringförmigen Messelements können zusätzliche Vertiefungen ausgebildet sein, die tiefer sind als die Vertiefungen für die Sensorelemente, wobei die zusätzlichen Vertiefungen so zwischen den Vertiefungen für die Sensorelemente angeordnet sind, dass in Umfangrichtung des ringförmigen Messelements Messsegmente gebildet werden, auf denen je eine Vertiefung für wenigstens ein Sensorelement angeordnet ist. Es hat sich herausgestellt, dass durch solche zusätzlichen Vertiefungen eine noch präzisere Bestimmung der radialen Kraft möglich ist.

Die zusätzlichen Vertiefungen können insbesondere L-förmig oder T-förmig ausgebildet sein. Die zusätzlichen Vertiefungen können also einen Querschnitt aufweisen, der im Wesentlichen T-förmig oder L-förmig ist, also in einem ersten Teilabschnitt eine Erstreckung in einer Richtung senkrecht zur Umfangsrichtung und senkrecht zur Mittelachse und in einem zweiten Teilabschnitt eine Erstreckung in Umfangsrichtung aufweist.

Mit anderen Worten können also in einer Richtung senkrecht zur Umfangrichtung und senkrecht zur Mittelachse des ringförmigen Messelements gesehen Hinterschneidungen in den Messsegmenten vorgesehen sein. Durch derartige Hinterschneidungen kann die Präzision der Kraftmessung weiter erhöht werden.

Es kann insbesondere eine gerade Anzahl von Sensorelementen vorgesehen sein, von denen sich jeweils zwei am ringförmigen Messelement diametral gegenüber liegen, die außerdem auf einer Wheatstone'sche Messbrücke geschaltet sind. Durch eine derartige Anordnung ist es nicht nur möglich, den Betrag der Radialkraft, sondern auch die Wirkrichtung der Radialkraft zu messen. Die Wirkrichtung der Kraft steht im Zusammenhang mit dem Abwurfwinkel. Wenn man auch die Wirkrichtung der Kraft bestimmt, kann somit auch eine Aussage über den Abwurfwinkel und damit über die Querverteilung des Düngers getroffen werden.

Der Vorratsbehälter kann ein von einem motorischen Stellelement einstellbares Dosierorgan aufweisen, welches den auszubringenden Dünger in einstellbarer Weise der Schleuderscheibe zuführt, wobei das motorische Stellelement des Dosierorgans von einem mit dem ringförmigen Messelement verbundenen Bordrechner (Bordcomputer) aufgrund eines in einem Speicher des Bordrechners abgelegten Programms unter Berücksichtigung der vom ringförmigen Messelement an den Bordrechner übermittelten Messdaten ansteuerbar und das Dosierorgan einstellbar sein kann. Hierdurch kann sichergestellt werden, dass aufgrund der von dem Sensor ermittelten Messdaten in Verbindung mit einem Bordrechner die gewünschte Ausbringmenge an dem Dosierorgan eingestellt und somit ausgebracht wird. Mit anderen Worten können die vom ringförmigen Messelement stammenden Messdaten zur Regelung des Schleuderdüngerstreuers verwendbar sein.

Mit dem Bordrechner kann aufgrund eines im Speicher des Bordrechners hinterlegten Programms insbesondere der ausgebrachte Massenstrom basierend auf der bestimmten radialen Kraft ermittelbar sein. Der Bordrechner kann so ausgebildet sein, dass er den ermittelten Massenstrom dann mit einem Sollwert vergleicht und das oben genannte Dosierorgan entsprechend auf eine Sollgröße regelt.

Alternativ oder zusätzlich zu einer automatischen Regelung kann das Dosierorgan auch durch eine Bedienperson einstellbar sein, insbesondere über den Bordrechner und eine entsprechende Eingabeeinrichtung. In diesem Fall kann auf einer mit dem Bordrechner verbundenen Anzeigeeinrichtung eine auf den vom ringförmigen Messelement an den Bordrechner übermittelten Messdaten basierende Anzeige darstellbar sein.

Insbesondere kann der Bordrechner so ausgebildet sein, dass basierend auf den vom ringförmigen Messelement an den Bordrechner übermittelten Messdaten, der aktuell ausgebrachte Massenstrom angezeigt wird.

Alternativ oder zusätzlich kann ein auf den vom ringförmigen Messelement an den Bordrechner übermittelten Messdaten basierender Vorschlag für wenigstens einen Parameter zur Einstellung des Dosierorgans angezeigt werden, mit dem ein gewünschter Massenstrom erzielt werden kann.

Alternativ oder zusätzlich kann basierend auf den vom ringförmigen Messelement an den Bordrechner übermittelten Messdaten angezeigt werden, ob der aktuell ausgebrachte Massenstrom kleiner, größer oder gleich einem gewünschten Wert ist.

Mit dem Bordrechner kann aufgrund eines im Speicher des Bordrechners hinterlegten Programms alternativ oder zusätzlich der Abwurfwinkel und/oder die Querverteilung des Düngers basierend auf der Wirkrichtung der radialen Kraft ermittelbar sein. Der Bordrechner kann so ausgebildet sein, dass er den Abwurfwinkel und/oder die Querverteilung mit einer Sollgröße vergleicht und die Position der Wurfschaufeln oder die Position eines Einleitsystems, über welches der Dünger der Schleuderscheibe zuführbar ist, entsprechend regelt. Dafür kann der Schleuderdüngerstreuer insbesondere derart ausgebildet sein, dass der Abwurfwinkel der wenigstens einen Wurfschaufel einstellbar ist, insbesondere über eine motorische Stellvorrichtung.

Alternativ oder zusätzlich kann auch hier eine manuelle Regelung durch eine Bedienperson möglich sein. In diesem Fall kann auf einer mit dem Bordrechner verbundenen Anzeigeeinrichtung eine auf den vom ringförmigen Messelement an den Bordrechner übermittelten Messdaten basierende Anzeige darstellbar sein.

Insbesondere kann der Bordrechner so ausgebildet sein, dass basierend auf den vom ringförmigen Messelement an den Bordrechner übermittelten Messdaten, der aktuelle Abwurfwinkel der wenigstens einen Wurfschaufel oder die resultierende Querverteilung des Düngers angezeigt wird.

Alternativ oder zusätzlich kann ein auf den vom ringförmigen Messelement an den Bordrechner übermittelten Messdaten basierender Vorschlag für wenigstens einen Parameter zur Einstellung des Abwurfwinkels der wenigstens einen Wurfschaufel oder der Position des Einleitsystems angezeigt werden, mit dem eine gewünschte Querverteilung erzielt werden kann.

Alternativ oder zusätzlich kann basierend auf den vom ringförmigen Messelement an den Bordrechner übermittelten Messdaten angezeigt werden, ob der aktuelle Abwurfwinkel der wenigstens einen Wurfschaufel oder die resultierende Querverteilung des Düngers kleiner, größer oder gleich einem gewünschten Wert ist.

Obwohl oben ein separates ringförmiges Messelement beschrieben wurde, ist es auch möglich, dass das ringförmige Messelement Teil eines Lagers der Antriebswelle ist. Beispielsweise kann das ringförmige Messelement einer feststehenden Lagerschale entsprechen oder diese umfassen. In diesem Fall können das wenigstens eine Sensorelement und/oder die genannten Vertiefungen also als Teil des Lagers ausgebildet sein.

Die Erfindung stellt außerdem ein Verfahren zum Regeln des von einem Schleuderdüngerstreuer ausgebrachten Düngermassestroms bereit, wobei der Schleuderdüngerstreuer einen Vorratsbehälter aufweist, unter dem zumindest eine um eine aufrechte Achse mittels zumindest einer Antriebswelle rotierend antreibbare Schleuderscheibe angeordnet ist, wobei auf der Schleuderscheide zumindest eine Wurfschaufel angeordnet ist, und wobei der Vorratsbehälter ein von einem motorischen Stellelement einstellbares Dosierorgan aufweist, welches den auszubringenden Dünger in einstellbarer Weise der Schleuderscheibe zuführt, das Verfahren umfassend die Schritte:

Bestimmen der auf die Antriebswelle wirkenden radialen Kraft; und

Ansteuern des Dosierorgans basierend auf der bestimmten radialen Kraft.

Ein derartiges Verfahren erlaubt eine einfache und präzise Regelung des von dem Schleuderdüngerstreuer ausgebrachten Düngermassestroms.

Mit ändern Worten kann gemäß dem Verfahren also eine oben beschriebene Messeinrichtung verwendet werden, um den Massenstrom zu regeln. Der Schleuderdüngerstreuer, insbesondere die Messeinrichtung, kann ein oder mehrere der oben genannten Merkmale aufweisen.

Das Verfahren kann auch ein Bestimmen der Wirkrichtung der radialen Kraft umfassen. In diesem Fall kann außerdem der Abwurfwinkel der Wurfschaufel basierend auf der bestimmten Wirkrichtung der radialen Kraft geregelt oder eingestellt werden. Insbesondere kann die Position eines Einleitsystems, über welches der Dünger der Schleuderscheibe zuführbar ist, eingestellt oder geregelt werden.

Das Regeln oder Einstellen des Düngermassestroms und/oder des Abwurfwinkels der Wurfschaufel kann automatisch oder über eine Bedienperson erfolgen. Im letzteren Fall kann wie oben ausgeführt eine entsprechende Anzeige auf einer mit dem Bordrechner verbundenen Anzeigeeinrichtung dargestellt werden.

Das Verfahren kann insbesondere in Form eines Programms im Speicher des Bordrechners des Schleuderdüngerstreuers abgelegt sein.

Mit anderen Worten stellt die Erfindung auch ein Computerprogrammprodukt bereit, umfassend eines oder mehrere von einem Computer lesbare Medien, mit von einem Computer ausführbaren Instruktionen zum Durchführen der Schritte eines oben genannten Verfahrens, wenn die Instruktionen auf einem Computer ausgeführt werden.

Weitere Merkmale und Vorteile der Erfindung werden nachfolgend anhand der beispielhaften Figuren erläutert. Dabei zeigt:
- Figur 1: den grundsätzlichen Aufbau eines Schleuderdüngerstreuers in einer Ansicht von hinten;
- Figur 2: eine Schleuderscheibe mit Teilen des zugehörigen Antriebs gemäß Stand der Technik;
- Figur 3: eine beispielhafte Schleuderscheibe mit Teilen des zugehörigen Antriebs;
- Figur 4: ein beispielhaftes ringförmiges Messelement; und
- Figur 5: eine Draufsicht auf ein ringförmiges Messelement im eingebauten Zustand.

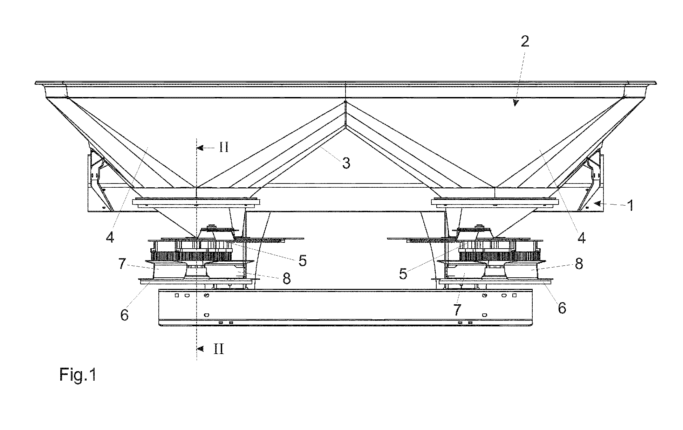

Der beispielhafte landwirtschaftliche Schleuderdüngerstreuer gemäß Figur 1 weist einen Rahmen 1 und einen Vorratsbehälter 2 auf. Auf der hier nicht gezeigten Vorderseite des Rahmens 1 können Dreipunktkupplungselemente zum Anbau an einen Schlepperkraftheber angeordnet sein. Der Vorratsbehälter 2 weist in seinem unteren Bereich die durch das dachförmige Mittelteil 3 voneinander getrennten Auslauftrichter 4 auf.

Die Auslauftrichter 4 sind jeweils durch ein Dosierorgan 5 abgeschlossen. Unterhalb des Dosierorgans 5 ist jeweils eine rotierend angetriebene Schleuderscheibe 6 angeordnet. Mit den Dosierorganen 5 kann das sich im Vorratsbehälter 2 befindliche zu verteilende Material in einstellbaren Mengen den Schleuderscheiben 6 zugeführt werden. Auf den Schleuderscheiben 6 sind Wurfschaufeln 7 und 8 angeordnet, welche das ihnen zugeleitete Material in Breitenverteilung auf der Bodenoberfläche verteilen.

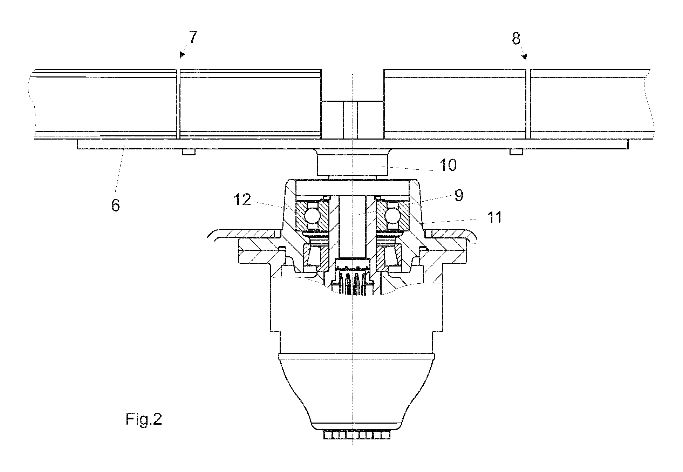

Figur 2 zeigt Details einer Schleuderscheibe und von Teilen des zugehörigen Antriebs. Die in Figur 2 dargestellte Ausführungsform zeigt eine aus dem Stand der Technik bekannte Ausbildung.

Dabei ist die Schleuderscheibe 6 über eine an der Antriebswelle 9 drehfest befestigte Nabe 10 ebenfalls drehfest und antriebsschlüssig mit der Antriebswelle 9 verbunden. Die Antriebswelle 9 ist in einem Gehäuse 11 über ein Kugellager 12 gelagert. Die Antriebswelle 9 wird im Beispiel über einen Kegelradantrieb von einer nicht dargestellten Kraftquelle angetrieben, beispielsweise über eine Gelenkwelle von dem den Schleuderdüngerstreuer tragenden Ackerschlepper.

Figur 2 zeigt außerdem zwei Wurfschaufeln 7 und 8, die in diesem Beispiel jeweils zweiteilig ausgebildet sind.

Bei den im Stand der Technik bekannten Systemen wird das Drehmoment der Antriebswelle 9 direkt oder indirekt bestimmt, wodurch Rückschlüsse auf den Düngermassestrom möglich sind.

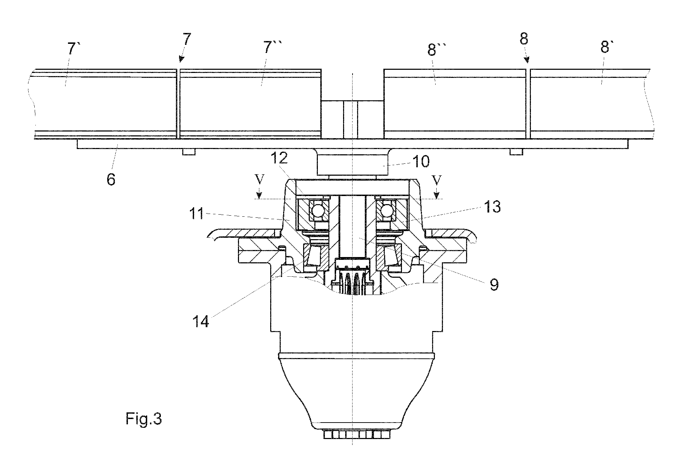

Figur 3 zeigt demgegenüber eine beispielhafte Schleuderscheibe 6 mit Teilen des zugehörigen Antriebs gemäß der vorliegenden Erfindung. Der wesentliche Unterschied zur Ausführung der Figur 2 liegt darin, dass das Kugellager 12 von einem ringförmigen Messelement 13 umgeben wird. Dieses ringförmige Messelement 13 ist Teil einer Messeinrichtung zur Bestimmung der auf die Antriebswelle 9 wirkenden radialen Kraft.

Die radial wirkende Kraft wird durch den von den Wurfschaufeln 7, 8 abgeworfenen Düngermassenstrom hervorgerufen. Insbesondere handelt es sich um eine Gegenkraft zur Corioliskraft, die an den Wurfschaufeln wirkt. Durch Messung des Betrags der radialen Kraft kann somit auf den Massenstrom des ausgebrachten Düngers geschlossen werden. Die zu erwartende radiale Kraft liegt bei einem Massenstrom von 5,5 kg/s beispielsweise bei etwa 5 kN.

Wird auch die Wirkrichtung der radialen Kraft bestimmt, so kann auch auf den Abwurfwinkel geschlossen werden. Je stumpfer der Abwurfwinkel, umso länger bleibt der Dünger auf der Scheibe. Die Wirkrichtung der radialen Kraft ändert sich entsprechend.

Die beispielhafte Messvorrichtung umfasst insbesondere ein ringförmiges Messelement 13, welches das obere Kugellager 12 aufnimmt. Über das untere Kegelrollenlager 14 ist die Antriebswelle 9 außerdem mit einem Kegelradgetriebe verbunden.

Auf der Schleuderscheibe 6 sind auch in diesem Beispiel zwei Wurfschaufeln 7, 8 angeordnet, die jeweils unterteilt sind in äußere Wurfschaufeln 7' und 8' und innere Wurfschaufeln 7" und 8".

Die Schleuderscheibe 6 ist auch hier über eine an der Antriebswelle 9 drehfest befestigte Nabe 10 ebenfalls drehfest und antriebsschlüssig mit der Antriebswelle 9 verbunden. Die Antriebswelle 9 ist in dem Gehäuse 11 über das Kugellager 12 gelagert. Die Antriebswelle 9 kann über den Kegelradantrieb von einer nicht dargestellten Kraftquelle angetrieben werden, beispielsweise über eine Gelenkwelle von dem den Schleuderdüngerstreuer tragenden Ackerschlepper. Das Kugellager 12 kann insbesondere ein Rillenkugellager sein.

Der Erfindungsgedanke soll im Folgenden nochmals kurz erläutert werden:

Während des Ausbringvorgangs von Dünger wird die Schleuderscheibe 6 und mit ihr die Wurfschaufeln 7 und 8 über die Antriebswelle 9 rotierend angetrieben. Der auszubringende Dünger wird von den inneren Teilen 7" und 8" der Wurfschaufeln 7 und 8 erfasst und über die äußeren Teile 7' und 8' der Wurfschaufeln 7 und 8 weiter beschleunigt und abgeworfen. Hierdurch wird eine bestimmte Kraft aufgrund des auszubringenden Massenstroms des Düngers auf die inneren Teile 7" und 8" der Wurfschaufeln 7 und 8 ausgeübt. Diese Kraft überträgt sich auf die Antriebswelle 9 und kann durch die beschriebene Messeinrichtung bestimmt werden.

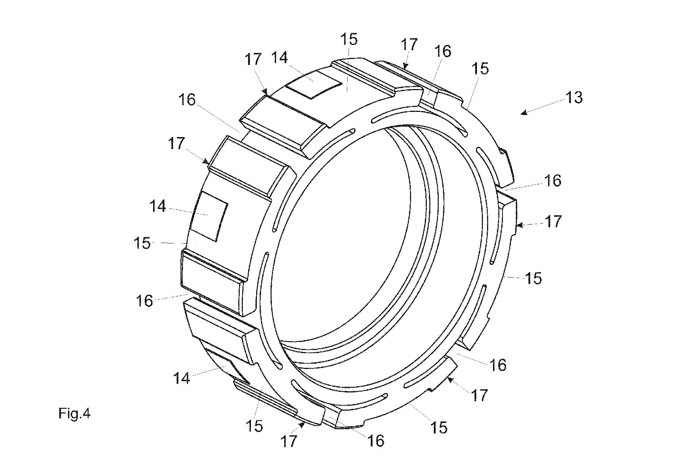

Figur 4 zeigt eine perspektivische Ansicht des in Figur 3 verwendeten beispielhaften ringförmigen Messelements 13. Auf dem ringförmigen Messelement 13 sind mehrere als Dehnungsmessstreifen 14 ausgebildete Sensorelemente angeordnet. Die Dehnungsmessstreifen 14 sind je in einer Vertiefung 15 angeordnet. Dadurch kann erreicht werden, dass kein direkter Kontakt zu dem Teil besteht, in den das ringförmige Messelement 13 eingepresst wird, zum Beispiel das Gehäuse 11 der Antriebswelle 9.

Entlang des äußeren Umfangs des ringförmigen Messelements 13 sind zusätzliche Vertiefungen 16 ausgebildet, die tiefer sind als die Vertiefungen 15 für die Dehnungsmessstreifen 14. Die zusätzlichen Vertiefungen 16 sind so zwischen den Vertiefungen 15 angeordnet, dass in Umfangsrichtung des ringförmigen Messelements 13 Messsegmente 17 gebildet werden, auf denen je eine Vertiefung 15 für wenigstens einen Dehnungsmessstreifen 14 angeordnet ist.

Die zusätzlichen Vertiefungen 16 sind in diesem Beispiel T-förmig ausgebildet, weisen also im Querschnitt senkrecht zur Mittelachse des ringförmigen Messelements 13 annähernd die Form des Buchstaben T auf. Die Ausdehnung in Umfangsrichtung folgt dabei der Krümmung des ringförmigen Messelements 13.

Mit anderen Worten weisen die Messsegmente 17 in einer Richtung senkrecht zur Umfangsrichtung und senkrecht zur Mittelachse des ringförmigen Messelements 13, Hinterschneidungen auf.

Durch eine solche Ausbildung der zusätzlichen Vertiefungen 16 können die von der radialen Kraft hervorgerufenen Deformationen der Messsegmente 17 erhöht werden, wodurch die Messungen der Dehnungsmessstreifen 14 präziser ausfallen können.

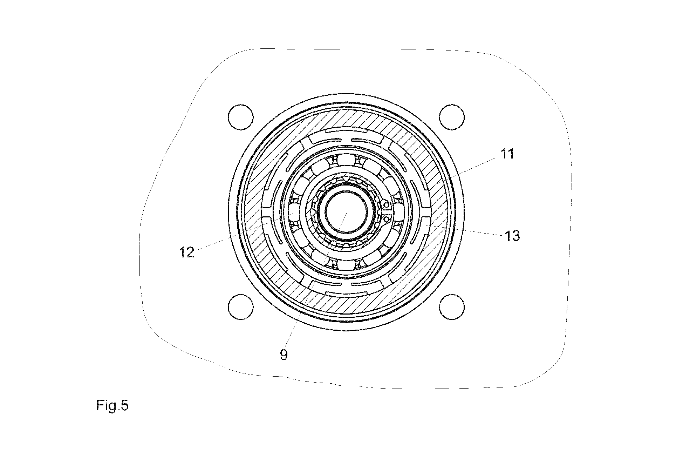

Figur 5 zeigt einen Querschnitt durch einen Teil des Getriebegehäuses der Antriebswelle 9, in einer Ebene senkrecht zur Längsachse der Antriebswelle 9. Hier ist das ringförmige Messelement 13 in das Gehäuse 11 eingepresst. Das ringförmige Messelement 13 wird dabei unter Vorspannung in das Gehäuse eingepresst. Ebenfalls in Figur 5 gezeigt ist das Kugellager 12, das vom ringförmigen Messelement 13 umgeben wird.

Obwohl in den beigefügten Figuren ein separates ringförmiges Messelement 13 beschrieben wurde, könnten die Sensorelemente sowie die oben beschriebenen Vertiefungen alternativ auch an einer fest stehenden Lagerschale des Kugellagers 12 angeordnet sein.

In den Figuren nicht dargestellt sind außerdem Messleitungen, die von den Dehnungsmessstreifen 14 wegführen und die Dehnungsmessstreifen 14 mit einer Auswerteeinheit, beispielsweise einem Bordrechner, verbinden.

Gegenüberliegende Dehnungsmessstreifen können insbesondere auf je eine Wheatstone'sche Messbrücke geschaltet sein (Vollbrücke durch zwei Messgitter pro Dehnungsmessstreifen). Dadurch ist eine Kraftmessung in drei Achsen möglich. Werte der drei Messachsen können geometrisch addiert werden, um im Zweiachsenkoordinatensystem rechnen zu können. Damit kann die Wirkrichtung der Kraft bestimmt werden.

Die oben beschriebene Messeinrichtung kann vorab auf einem Prüfstand mit umlaufend gleichbleibender Radiallast kalibriert werden.

Wie in Zusammenhang mit Figur 1 ausgeführt, kann der Vorratsbehälter des Schleuderdüngerstreuers ein von einem motorischen Stellelement einstellbares Dosierorgan aufweisen, welches den auszubringenden Dünger in einstellbarer Weise der Schleuderscheibe zuführt. Das motorische Stellelement des Dosierorgans kann von dem Bordrechner angesteuert werden. Insbesondere kann im Speicher des Bordrechners ein Programm abgelegt sein, das es erlaubt, unter Berücksichtigung der vom ringförmigen Messelement an den Bordrechner übermittelten Messdaten das Dosierorgan beziehungsweise das motorische Stellelement anzusteuern und damit einzustellen. Somit kann der Bordrechner für ein optimales Streuverhalten die aktuelle Ausbringmenge auf eine Sollgröße regeln.

Ebenso kann der Abwurfwinkel der wenigstens einen Wurfschaufel basierend auf der bestimmten Wirkrichtung der Kraft geregelt werden. Damit kann der Bordrechner für ein optimales Streuverhalten die aktuelle Querverteilung auf eine Sollgröße regeln.

Die Regelung oder Einstellung des Massestroms und/oder des Abwurfwinkels kann auch durch eine Bedienperson erfolgen. Dafür kann der Bordrechner auch Vorschläge machen, um den Massestroms und/oder den Abwurfwinkel optimal einzustellen. Insbesondere können dafür entsprechende Informationen der Bedienperson über eine Anzeigeeinrichtung dargestellt werden.

Es versteht sich, dass in den zuvor beschriebenen Ausführungsbeispielen genannte Merkmale nicht auf diese speziellen Kombinationen beschränkt sind und auch in beliebigen anderen Kombinationen mögliche sind.

## Patentansprüche

1. Schleuderdüngerstreuer mit Vorratsbehälter (2), unter dem zumindest eine um eine aufrechte Achse mittels zumindest einer Antriebswelle (9) rotierend antreibbare Schleuderscheibe (6) angeordnet ist, wobei auf der Schleuderscheibe (6) zumindest eine Wurfschaufel (7; 8) angeordnet ist, **gekennzeichnet durch** eine Messeinrichtung zur Bestimmung der auf die Antriebswelle (9) wirkenden radialen Kraft, die **durch** den von der zumindest einen Wurfschaufel (7; 8) abgeworfenen Düngermassenstrom hervorgerufen wird.

2. Schleuderdüngerstreuer nach Anspruch 1, wobei die Messeinrichtung ein ringförmiges Messelement (13) umfasst, das ein Lager (12) der Antriebswelle (9) umgebend angeordnet ist.

3. Schleuderdüngerstreuer nach Anspruch 2, wobei das ringförmige Messelement (13) ein oberes Lager (12) der Antriebswelle (9) umgibt, über das die Antriebswelle (9) in einem Gehäuse (11) gelagert ist.

4. Schleuderdüngerstreuer nach einem der Ansprüche 2 oder 3, wobei am ringförmigen Messelement (13) wenigstens ein Sensorelement zur Bestimmung der radialen Kraft angeordnet ist.

5. Schleuderdüngerstreuer nach Anspruch 4, wobei mit dem wenigstens einen Sensorelement eine mechanische Spannung und/oder Dehnung direkt und/oder indirekt bestimmbar oder messbar ist.

6. Schleuderdüngerstreuer nach einem der Ansprüche 2 bis 5, wobei entlang des äußeren Umfangs des ringförmigen Messelements Vertiefungen (15) ausgebildet sind, in denen je wenigstens ein Sensorelement angeordnet ist.

7. Schleuderdüngerstreuer nach Anspruch 6, wobei entlang des äußeren Umfangs des ringförmigen Messelements (13) zusätzliche Vertiefungen (16) ausgebildet sind, die tiefer sind als die Vertiefungen (15) für die Sensorelemente (15), wobei die zusätzlichen Vertiefungen (16) so zwischen den Vertiefungen (15) für die Sensorelemente angeordnet sind, dass in Umfangsrichtung des ringförmigen Messelements (13) Messsegmente (17) gebildet werden, auf denen je eine Vertiefung (15) für wenigstens ein Sensorelement angeordnet ist.

8. Schleuderdüngerstreuer nach Anspruch 7, wobei die zusätzlichen Vertiefungen (16) L-förmig oder T-förmig ausgebildet sind.

9. Schleuderdüngerstreuer nach einem der Ansprüche 4 bis 8, wobei eine gerade Anzahl von Sensorelementen vorgesehen ist, von denen sich jeweils zwei am ringförmigen Messelement (13) gegenüberliegen und die auf einer Wheatstone'schen Messbrücke geschaltet sind.

10. Schleuderdüngerstreuer nach einem der vorangegangenen Ansprüche, wobei der Vorratsbehälter ein von einem motorischen Stellelement einstellbares Dosierorgan (5) aufweist, welches den auszubringenden Dünger in einstellbarer Weise der Schleuderscheibe (6) zuführt, wobei das motorische Stellelement des Dosierorgans (5) von einem mit dem ringförmigen Messelement (13) verbundenen Bordrechner aufgrund eines in einem Speicher des Bordrechner abgelegten Programms unter Berücksichtigung der vom ringförmigen Messelement (13) an den Bordrechner übermittelten Messdaten ansteuerbar und das Dosierorgan (5) einstellbar ist.

11. Schleuderdüngerstreuer nach Anspruch 10, wobei mit dem Bordrechner aufgrund eines im Speicher des Bordrechners hinterlegten Programms der ausgebrachte Massenstrom basierend auf der bestimmten radialen Kraft ermittelbar ist.

12. Verfahren zum Regeln des von einem Schleuderdüngerstreuer ausgebrachten Düngermassestroms, wobei der Schleuderdüngerstreuer einen Vorratsbehälter (2) aufweist, unter dem zumindest eine um eine aufrechte Achse mittels zumindest einer Antriebswelle (9) rotierend antreibbare Schleuderscheibe (6) angeordnet ist, wobei auf der Schleuderscheibe (6) zumindest eine Wurfschaufel (7; 8) angeordnet ist, und wobei der Vorratsbehälter (2) ein von einem motorischen Stellelement einstellbares Dosierorgan (5) aufweist, welches den auszubringenden Dünger in einstellbarer Weise der Schleuderscheibe (6) zuführt, das Verfahren umfassend die Schritte:
Bestimmen der auf die Antriebswelle (9) wirkenden radialen Kraft; und
Ansteuern des Dosierorgans (5) basierend auf der bestimmten radialen Kraft.

13. Computerprogrammprodukt umfassend eines oder mehrere von einem Computer lesbare Medien, mit von einem Computer ausführbaren Instruktionen zum Durchführen der Schritte des Verfahrens nach Anspruch 12, wenn die Instruktionen auf einem Computer ausgeführt werden.
